# EUROPEAN PATENT SPECIFICATION

(11) **EP 4 662 620 B1**
(45) Date of publication and mention of the grant of the patent: **21.10.2026**
(21) Application number: 24703989.4
(22) Date of filing: 08.02.2024
(51) Int. Cl.: G06Q 10/0639, G07C 3/14, G09B 19/00

(54) **VISUAL INSPECTION METHOD**
VERFAHREN ZUR VISUELLEN INSPEKTION
PROCÉDÉ D'INSPECTION VISUELLE

(30) Priority: 10.02.2023 CH 1182023
(43) Date of publication of application: 17.12.2025
(73) Proprietor: Crypto Pharma Solutions AG, 4058 Basel (CH)
(72) Inventor: HILTBRAND, Thomas, 5400 Baden (CH)
(74) Representative: Latscha Schöllhorn Partner AG
(86) International application number: PCT/EP2024/053118
(87) International publication number: WO 2024/165650

(56) References cited:
- US-A1- 2004 123 567
- US-A1- 2020 130 948
- US-A1- 2022 354 609
- NN: "Inspection, Labeling, and Packaging", 31 December 2016 (2016-12-31), pages 1 - 28, XP093000886, Retrieved from the Internet <URL:https://biomanufacturing.org/uploads/files/786663053239827062-chapter-15.pdf> [retrieved on 20221122]

## Description

### Technical Field

The present invention generally relates to a method of visual inspection of drug containers.

### Background Art

Manual visual inspection is a common method for performing 100% visual inspection of parenteral liquids and remains a critical procedure that many manufacturers continue to perform.

Automated visual inspection, with its higher throughput and lower running costs, may provide an effective alternative. Automated visual inspection has improved significantly over the last decade with digitalization and data processing, offering manufacturers a consistent process not subject to fatigue or mood.

A drug handling line using automated visual inspection is for example described in EP 3 642 679 A1. The drug handling line comprises (a) a processing and control unit storing a batch number relating to a predetermined batch of containers to be handled, (b) at least one identifier, unique for each container, applied to each container, each identifier being stored and associated to a unique container in said processing and control unit, (c) at least one identifier reader, placed along the handling line, reading the identifier of each container, (d) selecting means able to discard, reject and/or block a container in case of negative correspondence between its identifier and the batch number relating to the batch being processed in the handling line and comprising an inspection line having an inspection station using a camera.

US2022354609A1 discloses a system for tracking medical containers (vials, syringes, cartridges) using individual UDI marks combined with an RFID tag embedded in the packaging nest, linked to a data storage system, including visual inspection with accepted/rejected status recording.

While manual visual inspection may appear old-fashioned compared to its automated alternative, it is still recommended (e.g. USP 1790 "Visual Inspection of Injections") to develop and maintain a high level of expertise in manual visual inspection, even if the volume of manually inspected batches is small.

Hence, with regard in particular to small or medium batch sizes for vials or syringes, it is still customary that the vials or syringes are manually visually inspected.

Thereby, defect vials are sorted out during inspection according to their defects. After inspection or after a certain period of time the vials are assigned to the specific defects and are counted and reported. In other words, the vials are sorted out and need to be physically separated according to their defects to allow later investigation. This step is however errors-prone since the defect vials are not labelled at this step and can therefore not easily be visually distinguished.

Hence, there is still a need to further improve the handling of sorted out respectively defect vials and the documentation thereof.

It is therefore the object of the present invention to provide for an improved manual or semi-automatic visual inspection method by means of which the above shortcomings may be overcome.

### Disclosure of the Invention

According to the invention these needs are settled by an assisted visual inspection method of drug containers. The method comprises the steps of: (a) providing the drug containers each with a unique identifier wherein identification information relating to each unique identifier is stored in a database of a software system; (b) receiving drug containers from an upstream filling station in an inspection station for drug containers; (c) visually inspecting the drug containers by an operator in the inspection station wherein, when the operator detects a defect (bad) drug container, (c1) the unique identifier of the defect drug container is presented to a reading unit of the software system being configured to read the identification information of the unique identifier of the defect (bad) drug container and to trigger an input unit of the software system, (c2) the operator enters into the input unit a defect code assigned to the specific kind of defect detected for the defect (bad) drug container, wherein the defect code is assigned to the identification information of unique identifier of the defect (bad) drug container, (c3) storing the defect code together with the identification information of the unique identifier of the defect (bad) drug container in the database, and (c4) separating the defect (bad) drug container from non-defect (good) drug containers.

It is noted that the above assisted visual inspection method steps (a), (b), (c), (c1), (c2), (c3) and (c4) may but need not to be performed in the given order. In particular, it is also conceivable that step (c4) is performed before step (c1), i.e. in such a way that the detected defect (bad) drug containers are separated and collected and subsequently steps (c1), (c2) and (c3) are performed with the collected defect (bad) drug containers.

The "visual inspection" as used herein may be performed by the operator in a purely manual manner or in semi-automatic manner, i.e. where after the visual inspection by the operator the vials are lined up mechanically/automatically and are brought in position and are rotated in front of an appropriate background and/or light.

It is further noted that also more than one defect may be detected by the operator and that respectively also more than one defect code may be assigned to a unique identifier of a defect (bad) vial.

Generally, under "assisted visual inspection" it is understood herein, that the inspection itself is carried out by a human operator (alternatively, an appropriate robot could also be used) and that for processing the results of the visual inspection an associated software system and database is used to particularly optimize documentation and facilitate evaluation of the process.

The "drug containers" as used herein may include in particular liquid filled vials, powder filled vials and liquid filled syringes or cartridges but also other forms of containers as for example blister packages may be subject to the inventive method.

The term "unique identifier" as used herein may include RFID tags, barcodes and QR codes and similar identifiers. In case of vials, preferably an RFID tag is arranged at the cap of the vial (e.g. by injection molding into the flip-off cap or attaching thereto).

The "identification information" stored in the database for each unique identifier generally contains a serial number to which specific attributes are associated, as for example date, time, product, manufacturer, location, batch, quality attributes. In case the drug containers are in the form of vials with a cap, further attributes may be recorded in the database, as for example the cap model or the cap color and the like.

The "defects" which are most commonly detected are for example scratches, under-/overfilling, particles, bad crimping and so forth.

The "reading unit" is usually in the form of a RFID sensor or a respective camera.

The "input unit" usually comprises a computer device in form of a personal computer, a tablet, a mobile phone, augmented reality device or a smart watch or the like.

Preferably, in step (b) the drug containers are received in a container transport means. The container transport means is usually in the form of a box or holding unit in which the drug containers, particularly vials, syringes or cartridges, are transported from the filling station to the inspection station.

Preferably, step (c3) includes a verification of the identification information of the unique identifier of the defect (bad) drug container stored in the database in order to avoid misassignments. Here, the drug containers, in particular vials, are checked to avoid having a drug container which belongs e.g. to another product, batch, possesses a non-intended attribute or is assigned to the wrong process. The defect itself is recorded in step (c3) as a quality attribute for the specific vial in the database.

Preferably, in step (c4) the defect (bad) drug containers are stored in a bad container storage means and the non-defect (good) drug containers are stored in a good container storage means. The storage means are often in the form of boxes or holding units which may be used for further transport and/or which may be sealed in a subsequent process station.

Preferably, the good container storage means comprises a unique identifier which is presented after step (c4) to a second reading unit wherein the second reading unit is configured to determine the number of drug containers in the good container storage means and to differentiate between unique identifiers of the individual good drug containers and the unique identifier of the good container storage means. In this manner, a very efficient counting of drug containers within a filled and sealed box is achieved. In other words, the second reading unit may include an RFID reading system which accurately counts the number of drug containers in the box and to differentiate between RFID-tagged containers and the RFID tagged box.

Preferably, the identification information of the unique identifiers of the good drug containers stored in the database are verified in order to avoid misassignments. This means, that individual attributes of the drug containers are checked in order to avoid that a drug container which belongs to e.g. another product or another batch possesses a non-intended attribute or is assigned to a wrong process.

Preferably, the good drug containers are associated to the good container storage means (i.e. in the database) and quality attributes like the location, "good vial after inspection", operator ID, time etc. are assigned to the individual good drug containers and stored in the database. In this manner, an effective and documentation and evaluation are enabled.

Preferably, the sample drug containers are taken from the good drug containers before sealing of the good container storage means, wherein the sample drug containers are individually read by a third reading unit and registered in the database or the sample drug containers are stored as bulk in a sample drug container storage means and read as bulk by the third reading unit and registered in the database. This allows in particular an optimized process evaluation.

Preferably, the identification information of the unique identifiers of the sample drug containers stored in the database are verified in order to avoid misassignments. In other words, it shall be avoided that drug containers which belong to a different product or batch possess non-intended attributes or are assigned to the wrong process

Preferably, quality attributes are assigned to the individual sample drug containers and stored in the database. The quality attributes which are assigned to the individual drug containers include for example the location, the quality attribute "sample", the operator ID, time etc.

Preferably, as a last step a reconciliation report is generated. The reconciliation report shows the overall batch and reconciliation status. The reconciliation is successful if: The sum of all defects, good drug containers and samples corresponds to the number of good drug containers which have been recorded after filling, and no drug containers have been recorded which belong to another product, batch, possesses a non-intended attribute or is assigned to the wrong process. Nonconformity is displayed on the report.

Another aspect of the present invention comprises an inspection system for drug containers for carrying out the method described above, wherein the system comprises at least one input unit, at least one reading unit being connected to a software system with a database of the drug container handling line.

From the above it is apparent that by means of the inventive method, the respective drug containers are counted and reported whenever a defect is found, which results in an always up to date record of defects. At the end of the inspection a reconciliation report is automatically generated and no manual counting and statistical calculations are required. Further, every drug container has its own record.

In the following, an exemplary process description of an automated reconciliation of vials (i.e. from the beginning to the end) is provided for the purpose of illustration.

In a first process step of manufacturing and quality control of RFID tags, the RFID tags are manufactured; a unique, random serial number is written to the tag and tag is locked to prevent modifications; and 100% of the tags are tested and serial numbers of the good tags are registered in a database (date, time, manufacturer, location).

In a second process step of integrating the RFID tags into the vial cap, the RFID tags are integrated into the vial cap, e.g. by injection molding into the flip-off caps; and 100% of the integrated tags are tested and serial numbers of the good RFID tags are registered in the database (date, time, manufacturer, location, batch). Potential other attributes are recorded in the database, as for example cap model and color.

In a third (optional) process step, an aggregation of the vial caps to the respective stock keeping unit (SKU).

In a fifth process step, the vials are filled and capped, wherein RFID-tagged vial caps are applied to the vials during the capping process; the RFID-tagged caps of the good vials are read and registered at the end of the capping process; the registration of the vials includes the assignment of product, process and quality attributes to the serial number of the RFID tag, which can for example include product identification, batch number, time of processing, quality status "good vials after filling", product manufacturer and location (this is done in the database); reject vials are optionally registered as well; and the vials are packed into (transport) boxes.

In a sixth (optional) process step, the vials are aggregated and intermediately stored, wherein the number of vials per box might be counted directly after packing them after filling. An RFID gate is used to ensure that all objects are read; the boxes which already contain an RFID tag or the boxes which are provided with a label containing such a RFID tag (in this case the labels are printed and attached to the box); the vials are assigned to the respective box RFID tag (aggregation); the boxes may be moved and stored and the required movement or storage to or from certain storage locations can be registered in the database (such transactions are subsequently assigned to the individual vials due to the previous aggregation to the box); and a cool chain monitoring may be performed at this step by tracking entry and leave of storage locations with special temperature or humidity requirements (e.g. 2-8°C).

In a seventh (and usually final) process step, the inventive assisted visual inspection occurs. Therein, the vials are delivered in the (transport) boxes to the visual inspection area; each Vial is individually checked by an operator regarding visual quality attributes (multiple vials can be hold in the hand of the operator at once); good vials are stored in a new box; vials having a defect (e.g. scratches, under-/overfilling, particles or bad crimping) are presented to an RFID reader. The presence of an RFID-tagged vial triggers an action in a software system which allows the operator to record the related defect (i.e. a window on a tablet is opened where the operator may choose between several predetermined defects or may enter individually the specific kind of defect); the individual vials attributes are checked to avoid having a vial which belongs to another product, batch, possesses a non-intended attribute or is assigned to the wrong process; the defect is recorded as a quality attribute to the specific vial in a database; defect vials are then stored in a different box; filled boxes with good vials are sealed and presented to an RFID reading system; the RFID reading system uses a specific algorithm to accurately count the number of vials in the box and to differentiate between RFID tagged Vials and the RFID tagged box. The individual Vials attributes are checked to avoid having a Vial which belongs to another product, batch, possesses a non-intended attribute or is assigned to the wrong process. In addition, the Vials are aggregated to the box and attributes like the location, quality attribute "good vial after inspection", operator ID, time, etc. are assigned to the individual vials; samples are optionally taken in the previous steps from the good vials before sealing of the boxes; those samples are individually registered in the system after scanning the RFID tag or are stored in box and recorded as bulk similar as mentioned before; the individual vials attributes are checked to avoid having a vial which belongs to another product, batch, possesses a non-intended attribute or is assigned to the wrong process. Attributes like the location, quality attribute "sample", operator ID, time, etc. are assigned to the individual vials. Finally, a reconciliation report is generated by the software system showing the overall batch and reconciliation status. The reconciliation has been successful if the following criteria are fulfilled: (a) the sum of all defects, good vials and samples corresponds to the number of good vials which have been recorded after filling, and (b) no vials have been recorded which belong to another product, batch, possesses a non-intended attribute or are assigned to the wrong process. Nonconformity is displayed on the report.

The present invention is also very useful in the qualification of visual inspection operators, as is explained below.

The current qualification of visual inspection operators includes the following: firstly, visual Inspection operators need a special qualification to be allowed to visually inspect drug containers. For this purpose, a qualification set is established consisting of good containers and bad containers with defined defects. The number of defects and types of defects must not be known to the operator who performs the qualification.

Then, for the purpose of qualification, an operator needs to inspect the qualification set and sort out the defect container.

Afterwards, a trainer, quality responsible person or supervisor is reviewing the sorted out defects by comparing the codes or identifier attached to the vials with a qualification set catalogue stating the defects associated with the specific vials.

Finally, an acceptance limit is set for each type of defect that needs to be met to pass qualification.

In contrast, the qualification of visual inspection operators using the new method for assisted visual inspection is as follows.

The operator presents the defect (RFID-tagged) vials of the respective qualification set to the RFID sensor and records the defect. After inspection of the full qualification set the system evaluates the performance of the operator based on defects which have been assigned to the respective vials in the database as part of the creation of the qualification set. The assigned defects are visible in the system only to users with a dedicated role and is hidden from operators.

As will be understood from the above, an independent review of the performance during qualification is no longer required herewith. The defects and limits are stored in the data base of the software system and the qualification performance is automatically assessed by the software system. The qualification status of the operators which expires after a certain time period can also be tracked by the software system. The system can prevent visual inspection operations from an operator if the qualification is expired or if a qualification or requalification was not successful.

Thus, another aspect of the present invention relates to a qualification method for visual inspection operators, the method comprising the steps of: (a) providing a qualification set of drug containers containing a predetermined number of defect (bad) drug containers wherein the defect (bad) drug containers are each provided with a unique identifier wherein defect information relating to each unique identifier is stored in a data base of a software system; (b) providing the drug containers of the qualification set in an inspection station; (c) visually inspecting the drug containers of the qualification set by an operator in the inspection station, wherein when the operator detects a defect (bad) drug container, (c1) the unique identifier of the defect (bad) drug container is presented to a reading unit of the software system being configured to read the defect information of the unique identifier of the defect (bad) drug container and to trigger an input unit of the software system, (c2) the operator enters into the input unit a defect code assigned to the specific kind of defect detected for the defect (bad) drug container, wherein the defect code is assigned to the defect information of the unique identifier of the defect (bad) drug container, (c3) storing the defect code together with the defect information of the unique identifier of the defect (bad) drug container in the database, and (c4) verification in the software system whether the defect code entered by the operator matches with the defect information of the unique identifier of the defect (bad) drug container.

It is noted that the above qualification method steps (a), (b), (c), (c1), (c2), (c3) and (c4) may but need not to be performed in the given order. Also in case of the qualification method it is of course conceivable that the detected defect (bad) drug containers are separated and collected and subsequently steps (c1), (c2), (c3) and (c4) are performed with the collected defect (bad) drug containers.

The "visual inspection" as used herein may be performed by the operator in a purely manual manner or in semi-automatic manner, i.e. where after the visual inspection by the operator the vials are lined up mechanically/automatically and are brought in position and are rotated in front of an appropriate background and/or light.

It is further noted that also more than one defect may or should be detected by the operator and that respectively also more than one defect code may or should be assigned to a unique identifier of a defect (bad) vial by the operator.

The non-defect drug containers of the qualification set have no defect information assigned to their unique identifier and stored in the data base.

### Brief Description of the Drawings

The assisted visual operation procedure according to the present invention is described in more detail herein below by way of exemplary embodiments and with reference to the attached drawings, in which:
- Fig. 1: schematically shows an inspection station for vials according to the present invention;
- Fig. 2: shows an exemplary RFID-tagged box filled with good vials and a respective reading unit;
- Fig. 3: shows an exemplary RFID-tagged box with sample vials and a respective reading unit; and
- Fig. 4: shows an exemplary reconciliation report.

### Description of Embodiments

In the following description certain terms are used for reasons of convenience and are not intended to limit the invention. The terms "right", "left", "up", "down", "under" and "above" refer to directions in the figures. The terminology comprises the explicitly mentioned terms as well as their derivations and terms with a similar meaning. Also, spatially relative terms, such as "beneath", "below", "lower", "above", "upper", "proximal", "distal", and the like, may be used to describe one element's or feature's relationship to another element or feature as illustrated in the figures. These spatially relative terms are intended to encompass different positions and orientations of the devices in use or operation in addition to the position and orientation shown in the figures. For example, if a device in the figures is turned over, elements described as "below" or "beneath" other elements or features would then be "above" or "over" the other elements or features. Thus, the exemplary term "below" can encompass both positions and orientations of above and below. The devices may be otherwise oriented (rotated 90 degrees or at other orientations), and the spatially relative descriptors used herein interpreted accordingly. Likewise, descriptions of movement along and around various axes include various special device positions and orientations.

To avoid repetition in the figures and the descriptions of the various aspects and illustrative embodiments, it should be understood that many features are common to many aspects and embodiments. Omission of an aspect from a description or figure does not imply that the aspect is missing from embodiments that incorporate that aspect. Instead, the aspect may have been omitted for clarity and to avoid prolix description. In this context, the following applies to the rest of this description: If, in order to clarify the drawings, a figure contains reference signs which are not explained in the directly associated part of the description, then it is referred to previous or following description sections. Further, for reason of lucidity, if in a drawing not all features of a part are provided with reference signs it is referred to other drawings showing the same part. Like numbers in two or more figures represent the same or similar elements.

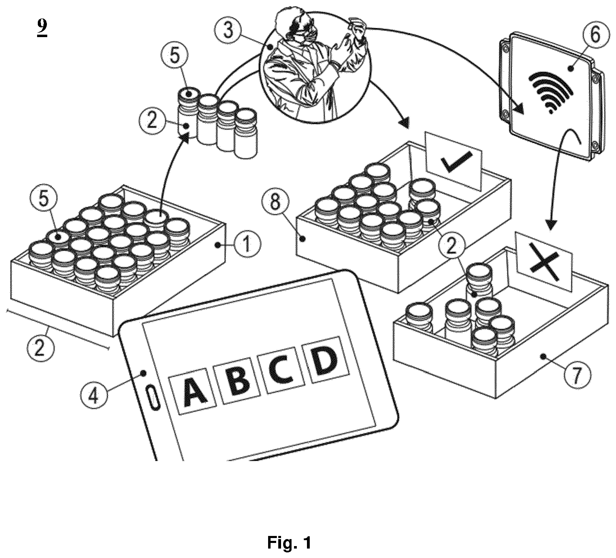

**Fig. 1** shows a schematic representation of the assisted visual operation procedure in accordance with the present invention. In an upstream filling (not shown) station, the vials 2 have each been provided with an RFID tag 5 (for example at the cap) wherein identification information relating to each RFID tag 5 is stored in a database of a software system of a respective drug container handling line.

Then, as shown on the left hand side, the vials 2 are received from the upstream filling station in an inspection station 9 of the drug container handling line. Here, the vials 2 are manually visually inspected by an operator 3. If the operator 3 detects a defect (bad) vial, the RFID tag 5 of the defect drug container/vial is presented to an RFID sensor 6 of the software system being configured to read the identification information of the RFID tag of the defect (bad) vial and to trigger an input unit of the software system. In the present case, there are displayed four touch fields A, B, C, D on a tablet 4 connected with the RFID sensor 6, wherein touch field A may represent scratches as defect, touch field B may represent particles as defect, touch field C may represent over-/underfilling as defect and touch field D may represent bad crimping (i.e. of the aluminum respectively tamper evidence" overcap" of the vial) as defect. Then, the operator 3 enters into the tablet 4 a defect code (i.e. by pressing touch field A, B, C or D or alternatively by typing in an individual code or code number in a respective text field on the tablet display) assigned to the specific kind of defect detected for the defect (bad) vial, wherein the defect code is assigned to the identification information of RFID tag 5 of the defect (bad) vial. Subsequently, the defect code is stored together with the identification information of the unique identifier of the defect (bad) drug vial in the database, and the defect (bad) vials are separated from the non-defect (good) vials and put into a "bad vial" box 7 or a "good vial" box 8.

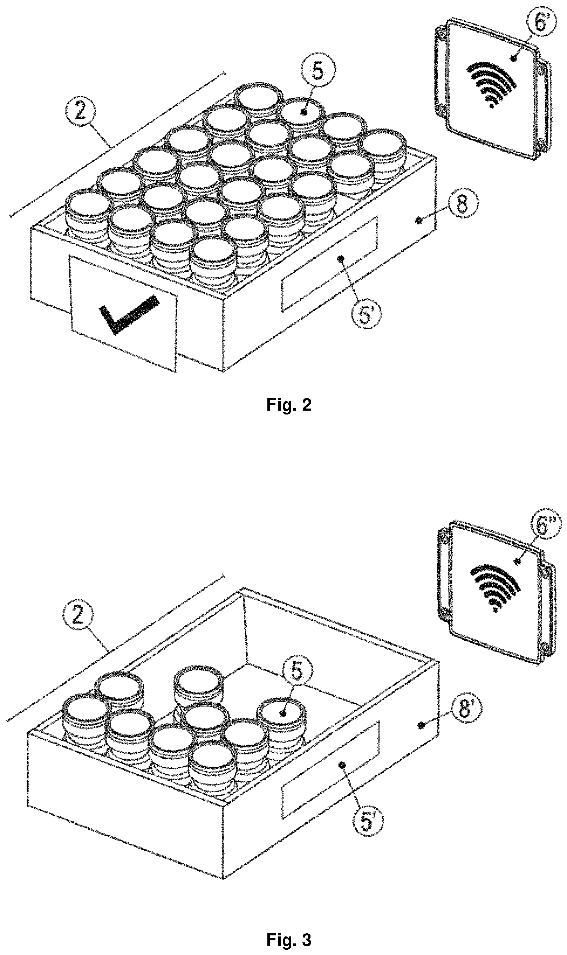

In **Fig. 2****,** a "good vial" box 8 with an RFID tag 5' (here in form of a label) is depicted which is presented to a reading unit in the form of a reading system 6' which accurately counts the number of vials 2 in the good vial box 8 and which differentiates between RFID-tagged good vials 2 (with RFID-tag 5 at the cap) and the label RFID-tagged good vial box 8.

In the same manner as depicted in **Fig. 2****,** sample vials 2 (with RFID-tag 5 at the cap) contained in a label RFID-tagged sample box 8' may be counted and differentiated, as shown in **Fig. 3****.** It is of course also possible to present the sample vials individually to a reading unit respectively reading system 6".

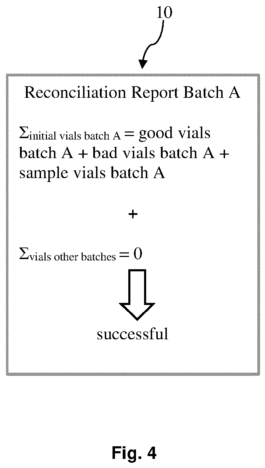

Finally, as depicted in **Fig. 4****,** a reconciliation report 10 is generated by the software system showing a batch and reconciliation status for an exemplary batch A. The reconciliation has been successful if the following criteria are fulfilled: (a) the sum of all defect vials, good vials and samples corresponds to the number of good vials which have been recorded after filling for batch A, and (b) no vials have been recorded which belong e.g. to another batch. Nonconformity would be displayed in an analogue manner on the report, if applicable.

Furthermore, in the claims the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. The term "about" in the context of a given numerate value or range refers to a value or range that is, e.g., within 20%, within 10%, within 5%, or within 2% of the given value or range. Components described as coupled or connected may be electrically or mechanically directly coupled, or they may be indirectly coupled via one or more intermediate components. Any reference signs in the claims should not be construed as limiting the scope.

### List of reference numbers:

- 1: transport box
- 2: vials / drug containers (and plurality of vials / drug containers in box)
- 3: operator
- 4: tablet / computer device / input unit
- 5: RFID tag (vial) / unique identifier
- 5': RFID tag (box) / unique identifier
- 6: RFID sensor / reading unit
- 6': RFID reading system / reading unit
- 6": RFID reading system / reading unit / samples
- 7: bad vial storing box
- 8: good vial storing box
- 8': sample storing box
- 9: inspection station
- 10: reconciliation report

## Claims

1. An assisted visual inspection method for drug containers (2), the method comprising the steps of:
(a) providing the drug containers (2) each with a unique identifier (5) wherein identification information relating to each unique identifier (5) is stored in a database of a software system;
(b) receiving drug containers (2) from an upstream filling station in an inspection station (9) for drug containers;
(c) visually inspecting the drug containers (2) by an operator (3) in the inspection station (9) wherein, when the operator (3) detects a defect drug container (2),
(c1) the unique identifier (5) of the defect drug container (2) is presented to a reading unit (6) of the software system being configured to read the identification information of the unique identifier (5) of the defect drug container (2) and to trigger an input unit (4) of the software system,
(c2) the operator (3) enters into the input unit (4) a defect code (A, B, C, D) assigned to the specific kind of defect detected for the defect drug container (2), wherein the defect code (A, B, C, D) is assigned to the identification information of unique identifier (5) of the defect drug container (2),
(c3) storing the defect code (A, B, C, D) together with the identification information of the unique identifier (5) of the defect drug container (2) in the database, and
(c4) separating the defect drug container (2) from non-defect drug containers (2).

2. The method according to claim 1, wherein in step (b) the drug containers (2) are received in a container transport means (1).

3. The method according to claim 1 or 2, wherein step (c3) includes a verification of the identification information of the unique identifier (5) of the defect drug container (2) stored in the database in order to avoid misassignments.

4. The method according to any one of the preceding claims, wherein in step (c4) the defect drug containers (2) are stored in a bad container storage means (7) and the non-defect drug containers are stored in a good container storage means (8).

5. The method according to claim 4, wherein the good container storage means (8) comprises a unique identifier (5') which is presented after step (c4) to a second reading unit (6') wherein the second reading unit is configured to determine the number of drug containers (2) in the good container storage means (8) and to differentiate between unique identifiers (5) of the individual good drug containers (2) and the unique identifier (5') of the good container storage means (8).

6. The method according to claim 5, wherein the identification information of the unique identifiers (5) of the good drug containers (2) stored in the database are verified in order to avoid misassignments.

7. The method according to claim 5 or 6, wherein the good drug containers (2) are associated to the good container storage means (8) and quality attributes are assigned to the individual good drug containers (2) and stored in the database.

8. The method of any one of claims 4 to 7 wherein sample drug containers (2) are taken from the good drug containers (2) of the good container storage means (8), wherein the sample drug containers (2) are individually read by a third reading unit (6") and registered in the database or the sample drug containers (2) are stored as bulk in a sample storage means (8') and read as bulk by the third reading unit (6") and registered in the database.

9. The method according to claim 8, wherein the identification information of the unique identifiers (5) of the sample drug containers (2) stored in the database is verified in order to avoid misassignments.

10. The method according to claim 8 or 9, wherein quality attributes are assigned to the individual sample drug containers (2) and stored in the database.

11. The method according to any one of the preceding claims, wherein as a last step a reconciliation report (10) is generated.

12. The method according to any one of the preceding claims, wherein the reading unit (6) is in the form of a RFID sensor.

13. The method according to any one of the preceding claims, wherein the input unit (4) is in the form of a computer device.

14. The method according to any one of the preceding claims, wherein the drug containers (2) are in the form of vials, syringes or cartridges.

15. The method according to any one of the preceding claims, wherein the unique identifier (5) is in the form of a RFID tag arranged at a cap of the vial (2).

16. An inspection system for drug containers (2) for carrying out the method according to any one of the preceding claims, wherein the system comprises at least one input unit (4), at least one reading unit (6, 6', 6") being connected to a software system with a database.

17. Qualification method for visual inspection operators, the method comprising the steps of:
(a) providing a qualification set of drug containers containing a predetermined number of defect drug containers wherein the defect drug containers are each provided with a unique identifier (5) wherein defect information relating to each unique identifier is stored in a data base of a software system;
(b) providing the drug containers of the qualification set in an inspection station (9);
(c) visually inspecting the drug containers of the qualification set by an operator (3) in the inspection station, wherein when the operator detects a defect drug container,
(c1) the unique identifier (5) of the defect drug container (2) is presented to a reading unit (6) of the software system being configured to read the defect information of the unique identifier (5) of the defect drug container (2) and to trigger an input unit (4) of the software system,
(c2) the operator (3) enters into the input unit (4) a defect code (A, B, C, D) assigned to the specific kind of defect detected for the defect drug container (2), wherein the defect code (A, B, C, D) is assigned to the defect information of the unique identifier (5) of the defect drug container (2),
(c3) storing the defect code (A, B, C, D) together with the defect information of the unique identifier (5) of the defect drug container (2) in the database, and
(c4) verification in the software system whether the defect code entered by the operator matches with the defect information of the unique identifier of the defect drug container.

## Patentansprüche

1. Verfahren zur unterstützten Sichtprüfung von Arzneimittelbehältern (2), wobei das Verfahren die folgenden Schritte umfasst:
(a) Versehen der Arzneimittelbehälter (2) jeweils mit einer eindeutigen Kennung (5), wobei Identifikationsinformationen zu jeder eindeutigen Kennung (5) in einer Datenbank eines Softwaresystems gespeichert sind;
(b) Entgegennahme der Arzneimittelbehälter (2) von einer vorgelagerten Abfüllstation in einer Prüfstation (9) für Arzneimittelbehälter;
(c) visuelle Prüfung der Arzneimittelbehälter (2) durch einen Bediener (3) in der Prüfstation (9), wobei, wenn der Bediener (3) einen fehlerhaften Arzneimittelbehälter (2) feststellt,
(c1) die eindeutige Kennung (5) des defekten Arzneimittelbehälters (2) einer Leseeinheit (6) des Softwaresystems vorgehalten wird, die so konfiguriert ist, dass sie die Identifikationsinformationen der eindeutigen Kennung (5) des defekten Arzneimittelbehälters (2) liest und eine Eingabeeinheit (4) des Softwaresystems auslöst,
(c2) der Bediener (3) in die Eingabeeinheit (4) einen Fehlercode (A, B, C, D) eingibt, der der spezifischen Art des für den fehlerhaften Arzneimittelbehälter (2) festgestellten Fehlers zugeordnet ist, wobei der Fehlercode (A, B, C, D) den Identifikationsinformationen des eindeutigen Identifikators (5) des fehlerhaften Arzneimittelbehälters (2) zugeordnet wird,
(c3) Speichern des Fehlercodes (A, B, C, D) zusammen mit den Identifikationsinformationen der eindeutigen Kennung (5) des fehlerhaften Arzneimittelbehälters (2) in der Datenbank, und
(c4) Trennen des fehlerhaften Arzneimittelbehälters (2) von fehlerfreien Arzneimittelbehältern (2).

2. Verfahren nach Anspruch 1, wobei in Schritt (b) die Arzneimittelbehälter (2) in einer Behältertransporteinrichtung (1) aufgenommen werden.

3. Verfahren nach Anspruch 1 oder 2, wobei Schritt (c3) eine Überprüfung der Identifikationsinformationen der eindeutigen Kennung (5) des defekten Arzneimittelbehälters (2), die in der Datenbank gespeichert sind, umfasst, um Fehlzuordnungen zu vermeiden.

4. Verfahren nach einem der vorstehenden Ansprüche, wobei in Schritt (c4) die fehlerhaften Arzneimittelbehälter (2) in einer Lagereinrichtung für fehlerhafte Behälter (7) und die fehlerfreien Arzneimittelbehälter in einer Lagereinrichtung für fehlerfreie Behälter (8) gelagert werden.

5. Verfahren nach Anspruch 4, wobei die Lagereinrichtung für fehlerfreie Behälter (8) eine eindeutige Kennung (5') umfasst, die nach Schritt (c4) einer zweiten Leseeinheit (6') vorgelegt wird, wobei die zweite Leseeinheit so konfiguriert ist, dass sie die Anzahl der Arzneimittelbehälter (2) in der Lagereinrichtung für fehlerfreie Behälter (8) ermittelt und zwischen den eindeutigen Kennungen (5) der einzelnen einwandfreien Arzneimittelbehälter (2) und der eindeutigen Kennung (5') der Lagereinrichtung für fehlerfreie Behälter (8) unterscheidet.

6. Verfahren nach Anspruch 5, wobei die Identifikationsinformationen der eindeutigen Identifikatoren (5) der in der Datenbank gespeicherten fehlerfreien Arzneimittelbehälter (2) überprüft werden, um Fehlzuordnungen zu vermeiden.

7. Verfahren nach Anspruch 5 oder 6, wobei die fehlerfreien Arzneimittelbehälter (2) der Lagereinrichtung (8) für fehlerfreie Behälter zugeordnet werden und den einzelnen fehlerfreien Arzneimittelbehältern (2) Qualitätsmerkmale zugewiesen und in der Datenbank gespeichert werden.

8. Verfahren nach einem der Ansprüche 4 bis 7, wobei Proben-Arzneimittelbehälter (2) aus den fehlerfreien Arzneimittelbehältern (2) der Lagereinrichtung (8) für fehlerfreie Behälter entnommen werden, wobei die Proben-Arzneimittelbehälter (2) einzeln von einer dritten Leseeinheit (6") ausgelesen und in der Datenbank registriert werden oder die Proben-Arzneimittelbehälter (2) als Sammelmenge in einer Probenlagereinrichtung (8') gelagert und als Sammelmenge von der dritten Leseeinheit (6") ausgelesen und in der Datenbank registriert werden.

9. Verfahren nach Anspruch 8, wobei die Identifikationsinformationen der eindeutigen Kennung (5) der in der Datenbank gespeicherten Arzneimittelprobenbehälter (2) überprüft werden, um Fehlzuordnungen zu vermeiden.

10. Verfahren nach Anspruch 8 oder 9, wobei den einzelnen Arzneimittelprobenbehältern (2) Qualitätsmerkmale zugeordnet und in der Datenbank gespeichert werden.

11. Verfahren nach einem der vorstehenden Ansprüche, wobei als letzter Schritt ein Abgleichbericht (10) erstellt wird.

12. Verfahren nach einem der vorstehenden Ansprüche, wobei die Leseeinheit (6) in Form eines RFID-Sensors ausgebildet ist.

13. Verfahren nach einem der vorstehenden Ansprüche, wobei die Eingabeeinheit (4) in Form eines Computergeräts ausgebildet ist.

14. Verfahren nach einem der vorstehenden Ansprüche, wobei die Arzneimittelbehälter (2) in Form von Fläschchen, Spritzen oder Kartuschen ausgebildet sind.

15. Verfahren nach einem der vorstehenden Ansprüche, wobei die eindeutige Kennung (5) in Form eines RFID-Tags vorliegt, der an einer Kappe des Fläschchens (2) angeordnet ist.

16. Ein Prüfsystem für Arzneimittelbehälter (2) zur Durchführung des Verfahrens gemäß einem der vorstehenden Ansprüche, wobei das System mindestens eine Eingabeeinheit (4) umfasst, wobei mindestens eine Leseeinheit (6, 6', 6") mit einem Softwaresystem mit einer Datenbank verbunden ist.

17. Verfahren zur Qualifizierung von Bedienern für die Sichtprüfung, wobei das Verfahren die folgenden Schritte umfasst:
(a) Bereitstellen eines Qualifizierungssatzes von Arzneimittelbehältern, der eine vorbestimmte Anzahl fehlerhafter Arzneimittelbehälter enthält, wobei die fehlerhaften Arzneimittelbehälter jeweils mit einer eindeutigen Kennung (5) versehen sind und wobei Fehlerinformationen, die sich auf jede eindeutige Kennung beziehen, in einer Datenbank eines Softwaresystems gespeichert sind;
(b) Bereitstellung der Arzneimittelbehälter des Qualifizierungssatzes an einer Prüfstation (9);
(c) visuelle Prüfung der Arzneimittelbehälter des Qualifizierungssatzes durch einen Bediener (3) an der Prüfstation, wobei, wenn der Bediener einen fehlerhaften Arzneimittelbehälter entdeckt,
(c1) die eindeutige Kennung (5) des fehlerhaften Arzneimittelbehälters (2) einer Leseeinheit (6) des Softwaresystems vorgehalten wird, die so konfiguriert ist, dass sie die Fehlerinformationen der eindeutigen Kennung (5) des fehlerhaften Arzneimittelbehälters (2) liest und eine Eingabeeinheit (4) des Softwaresystems auslöst,
(c2) der Bediener (3) in die Eingabeeinheit (4) einen Fehlercode (A, B, C, D) eingibt, der der spezifischen Art des für den fehlerhaften Arzneimittelbehälter (2) festgestellten Fehlers zugeordnet ist, wobei der Fehlercode (A, B, C, D) den Fehlerinformationen der eindeutigen Kennung (5) des fehlerhaften Arzneimittelbehälters (2) zugeordnet wird,
(c3) Speichern des Fehlercodes (A, B, C, D) zusammen mit den Fehlerinformationen der eindeutigen Kennung (5) des fehlerhaften Arzneimittelbehälters (2) in der Datenbank, und
(c4) Überprüfung im Softwaresystem, ob der vom Bediener eingegebene Fehlercode mit den Fehlerdaten der eindeutigen Kennung des fehlerhaften Arzneimittelbehälters übereinstimmt.

## Revendications

1. Procédé d'inspection visuelle assistée de récipients de médicaments (2), ledit procédé comprenant les étapes suivantes :
(a) doter chacun des récipients de médicaments (2) d'un identifiant unique (5), les informations d'identification relatives à chaque identifiant unique (5) étant stockées dans une base de données d'un système logiciel ;
(b) recevoir les récipients de médicaments (2) provenant d'une station de remplissage en amont dans une station d'inspection (9) pour récipients de médicaments ;
(c) inspecter visuellement les récipients de médicaments (2) par un opérateur (3) dans la station d'inspection (9), dans laquelle, lorsque l'opérateur (3) détecte un récipient de médicaments défectueux (2),
(c1) l'identifiant unique (5) du récipient de médicament défectueux (2) est présenté à une unité de lecture (6) du système logiciel, configurée pour lire les informations d'identification de l'identifiant unique (5) du récipient de médicament défectueux (2) et pour déclencher une unité de saisie (4) du système logiciel,
(c2) l'opérateur (3) saisit dans l'unité de saisie (4) un code de défaut (A, B, C, D) attribué au type spécifique de défaut détecté sur le récipient de médicament défectueux (2), le code de défaut (A, B, C, D) étant associé aux informations d'identification de l'identifiant unique (5) du récipient de médicament défectueux (2),
(c3) enregistrer le code de défaut (A, B, C, D) ainsi que les informations d'identification de l'identifiant unique (5) du récipient de médicament défectueux (2) dans la base de données, et
(c4) séparer le récipient de médicament défectueux (2) des récipients de médicament non défectueux (2).

2. Procédé selon la revendication 1, dans lequel, à l'étape (b), les récipients de médicaments (2) sont réceptionnés dans un moyen de transport de récipients (1).

3. Procédé selon la revendication 1 ou 2, dans lequel l'étape (c3) comprend une vérification des informations d'identification de l'identifiant unique (5) du récipient de médicament défectueux (2) stockées dans la base de données afin d'éviter toute erreur d'affectation.

4. Procédé selon l'une quelconque des revendications précédentes, dans lequel, à l'étape (c4), les récipients de médicaments défectueux (2) sont stockés dans un moyen de stockage des récipients défectueux (7) et les récipients de médicaments non défectueux sont stockés dans un moyen de stockage des récipients conformes (8).

5. Procédé selon la revendication 4, dans lequel le moyen de stockage des récipients conformes (8) comprend un identifiant unique (5') qui est présenté, après l'étape (c4) à une deuxième unité de lecture (6'), cette dernière étant configurée pour déterminer le nombre de récipients de médicaments (2) présents dans le moyen de stockage des récipients conformes (8) et pour distinguer les identifiants uniques (5) des différents récipients de médicaments conformes (2) de l'identifiant unique (5') du moyen de stockage des récipients conformes (8).

6. Procédé selon la revendication 5, dans lequel les informations d'identification des identifiants uniques (5) des récipients de médicaments conformes (2) stockées dans la base de données sont vérifiées afin d'éviter toute erreur d'attribution.

7. Procédé selon la revendication 5 ou 6, dans lequel les récipients de médicaments conformes (2) sont associés au moyen de stockage de récipients conformes (8) et des attributs de qualité sont attribués à chacun des récipients de médicaments conformes (2) et enregistrés dans la base de données.

8. Procédé selon l'une quelconque des revendications 4 à 7, dans lequel des récipients de médicaments échantillons (2) sont prélevés parmi les récipients de médicaments conformes (2) du moyen de stockage de récipients conformes (8), les récipients de médicaments échantillons (2) étant lus individuellement par une troisième unité de lecture (6") et enregistrés dans la base de données, ou bien les récipients de médicaments échantillons (2) sont stockés en vrac dans un moyen de stockage d'échantillons (8') et lus en vrac par la troisième unité de lecture (6"), puis enregistrés dans la base de données.

9. Procédé selon la revendication 8, dans lequel les informations d'identification des identifiants uniques (5) des récipients d'échantillons de médicaments (2) stockées dans la base de données sont vérifiées afin d'éviter toute erreur d'affectation.

10. Procédé selon la revendication 8 ou 9, dans lequel des attributs de qualité sont attribués à chaque récipient d'échantillon de médicament (2) et stockés dans la base de données.

11. Procédé selon l'une quelconque des revendications précédentes, dans lequel, en tant que dernière étape, un rapport de rapprochement (10) est généré.

12. Procédé selon l'une quelconque des revendications précédentes, dans lequel l'unité de lecture (6) se présente sous la forme d'un capteur RFID.

13. Procédé selon l'une quelconque des revendications précédentes, dans lequel l'unité de saisie (4) se présente sous la forme d'un dispositif informatique.

14. Procédé selon l'une quelconque des revendications précédentes, dans lequel les récipients de médicaments (2) se présentent sous la forme de flacons, de seringues ou de cartouches.

15. Procédé selon l'une quelconque des revendications précédentes, dans lequel l'identifiant unique (5) se présente sous la forme d'une étiquette RFID disposée sur un bouchon du flacon (2).

16. Système d'inspection de récipients de médicaments (2) destiné à mettre en œuvre le procédé selon l'une quelconque des revendications précédentes, dans lequel le système comprend au moins une unité d'entrée (4), au moins une unité de lecture (6, 6', 6") étant connectée à un système logiciel doté d'une base de données.

17. Procédé de qualification des opérateurs chargés de l'inspection visuelle, ledit procédé comprenant les étapes suivantes:
(a) doter un ensemble de qualification composé de récipients de médicaments contenant un nombre prédéterminé de récipients de médicaments défectueux, lesdits récipients de médicaments défectueux étant chacun munis d'un identifiant unique (5), les informations relatives aux défauts associées à chaque identifiant unique étant stockées dans une base de données d'un système logiciel ;
(b) mettre à disposition les récipients de médicaments de l'ensemble de qualification dans un poste d'inspection (9) ;
(c) procéder à l'inspection visuelle des récipients de médicaments de l'ensemble de qualification par un opérateur (3) dans le poste d'inspection, dans lequel, lorsque l'opérateur détecte un récipient de médicaments défectueux,
(c1) l'identifiant unique (5) du récipient de médicament défectueux (2) est présenté à une unité de lecture (6) du système logiciel, configurée pour lire les informations de défaut associées à l'identifiant unique (5) du récipient de médicament défectueux (2) et pour déclencher une unité de saisie (4) du système logiciel,
(c2) l'opérateur (3) saisit dans l'unité de saisie (4) un code de défaut (A, B, C, D) attribué au type spécifique de défaut détecté pour le récipient de médicament défectueux (2), le code de défaut (A, B, C, D) étant associé aux informations de défaut de l'identifiant unique (5) du récipient de médicament défectueux (2),
(c3) enregistrer le code de défaut (A, B, C, D) ainsi que les informations de défaut relatives à l'identifiant unique (5) du récipient de médicament défectueux (2) dans la base de données, et
(c4) vérification, au sein du système logiciel, de la concordance entre le code de défaut saisi par l'opérateur et les informations relatives au défaut associées à l'identifiant unique du récipient de médicament défectueux.
